# EUROPÄISCHE PATENTANMELDUNG

(11) **EP 0 625 665 A1**
(43) Veröffentlichungstag der Anmeldung: **23.11.1994**
(21) Anmeldenummer: 94107396.7
(22) Anmeldetag: 11.05.1994
(51) Int. Cl.: F16L 17/02, F16L 47/06, F16L 21/03

(54) **Rohrdichtung**

(30) Priorität: 12.05.1993 DE 4315958
(71) Anmelder: WOCO Franz-Josef Wolf & Co., D-63628 Bad Soden-Salmünster (DE)
(72) Erfinder: Wolf, Franz Josef, D-63628 Bad Soden-Salmünster (DE); Lauer, Hansjörg, D-63628 Bad Soden-Salmünster (DE)
(74) Vertreter: Jaeger, Klaus, Dr.

(57) **Zusammenfassung**

Ringgedichtete Rohrdichtung zwischen Muffe (1) und Spitzende (2) eines Rohrleitungssystems, bei dem die Muffe (1) innengestuft derart ausgebildet ist, daß der Innendurchmesser der Muffe am kragenseitigen Ende (7) der Ringnut (6) größer als am muffenspiegelseitigen Ende (8) der Ringnut (6) ist. Dadurch können Halte-, Fixier- und Stützelemente (5) des Dichtsystems im erweiterten Kragenabschnitt untergebracht werden, ohne daß der innenliegende Dichtspalt verbreitert werden muß.

## Beschreibung

Die Erfindung betrifft eine ringgedichtete Rohrdichtung der im Oberbegriff des Patentanspruchs 1 genannten Art.

Eine Rohrdichtung dieser Art ist aus der deutschen Patentschrift DE 27 06 754 C2 bekannt.

Dichtungen der hier in Rede stehenden und der bekannten Art sind insbesondere für Rohrsteckverbindungen in Rohrleitungssystemen aus Rohren aus mineralischen Werkstoffen, insbesondere für Steinzeugrohre, entwickelt worden. Bei Steckverbindungen in Rohrleitungssystemen dieser Art ist die trotz wesentlich verbesserter Herstellungstechnik noch immer gegebene große Fertigungstoleranz der Rohrabmessungen, auch die Unrundheit der Rohre, Muffen und Spitzenden, ein gravierendes Problem aufgrund der durch die Addition der Fertigungstoleranzen der einzelnen Rohrelemente großen Dichtspalttoleranzen zwischen der Muffeninnenwand und der Außenwand des Spitzendes. Bei kleinen Dichtspalten wird der Dichtring beim Einschieben des Spitzendes häufig aus der Verankerung gerissen und zum Muffenspiegel hin geschoben, während bei großen Dichtspaltbreiten und in radialer Richtung auf die Steckverbindung einwirkenden Scherlasten und Scheitellasten häufig die Dichtheit der Steckverbindung gefährdet ist. Hier könnte zwar eine größere Dimensionierung des Dichtringes Abhilfe schaffen, jedoch würde dies wiederum zu unüberwindbaren Problemen im Bereich der kleinsten Dichtspaltbreiten führen.

Ausgehend von diesem Stand der Technik liegt der Erfindung die Aufgabe zugrunde, eine Rohrdichtung der bekannten Art dahingehend zu verbessern, daß das Dichtsystem auch im Bereich der im Fertigungstoleranzbereich größten Dichtspaltbreiten und auch unter radial einwirkender Scherlast zuverlässig dichtet, gleichzeitig aber im Bereich der innerhalb der vorgegebenen Fertigungstoleranzen kleinsten Dichtspaltbreiten ein sicheres und leichtes Einschieben des Spitzendes gewährleistet, bei dem die Ringpositionierung nicht beeinträchtigt wird.

Zur Lösung dieser Aufgabe sieht die Erfindung vor, daß der Innendurchmesser der Muffe am muffenkragenseitigen Ende der Ringnut größer ist als am muffenspiegelseitigen Ende der Ringnut. Der kragenseitige Abschnitt der Muffe mit größerem Innendurchmesser und der spiegelseitige Bereich der Muffe mit kleinerem Innendurchmesser sind durch eine Ringnut voneinander getrennt. Diese Ringnut nimmt bestimmungsgemäß eine Haltemanschette eines aus gummielastischem Werkstoff bestehenden Dichtringes auf, die durch einen Klemmring radial auswärts in die Ringnut hinein gedrückt wird. Dadurch wird der Dichtring in an sich bekannter Weise fixiert. Entscheidend ist dabei, daß der Klemmring nicht mit seiner gesamten radialen Breite im Dichtspalt liegt, nämlich in dem Ringspalt zwischen dem engeren muffenspiegelseitigem Muffenabschnitt und der Außenwand des Spitzendes, sondern in dem erfindungsgemäß kragenseitig erweiternden Abschnitt der Muffe, der keine dichtspaltüberbrückenden Dichtelemente, sondern lediglich Klemmelemente, Halteelemente und Fixierelemente aufnimmt. Durch diese Funktionstrennung in den beiden axial hintereinander liegenden Muffenabschnitten können in den äußeren weiteren Muffenabschnitt stabile Stützelemente und Führungselemente für das Spitzende eingesetzt werden, wobei relativ große Toleranzen eingestellt werden können, ohne daß diese raumgreifenden Hilfskonstruktionen Kompromisse im eigentlichen Dichtspaltbereich erfordern.

Im Zusammenwirken mit einer solcherart gestuft ausgebildeten Muffe wird vorzugsweise ein Klemmring verwendet, der nach axial außen, also in Richtung auf den Kragen der Muffe zu, über den muffenkragenseitigen Rand der Ringnut, in der der Dichtring über die Manschette fixiert ist, hinausragt und in dem die kragenseitige Muffeninnenwand überlappenden Abschnitt einen nach radial innen vorspringenden und in der Radialebene liegenden Innenflansch angeformt aufweist, dessen Innendurchmeser deutlich größer als der in einem zulässigen Toleranzbereich größten tatsächliche Außendurchmesser des Spitzendes und gleichzeitig kleiner als der im Fertigungstoleranzbereich kleinste Innendurchmesser des engeren, spiegelseitigen Muffenabschnitts ist. Dieser Innenflansch kann dabei in beliebiger Weise so fest und verstärkt ausgebildet werden, daß er die Außenwand des Spitzendes auch bei größter Scheitellast zuverlässig und die eigentliche Gummidichtung schützend und schonend gegen die axial außen liegende weitere Muffeninnenwand abstützen kann.

Weitere Ausgestaltungen der Erfindung sind Gegenstand der Unteransprüche.

Die Erfindung ist im folgenden anhand eines Ausführungsbeispiels in Verbindung mit den Zeichnungen näher erläutert. Es zeigen:
- Fig. 1: ein Ausführungsbeispiel der ringgedichteten Rohrdichtung der Erfindung im vormontierten Zustand vor dem verformenden Einschieben des Spitzendes; und
- Fig. 2: das in Fig. 1 gezeigte Ausführungsbeispiel nach dem Einschieben des Spitzendes.

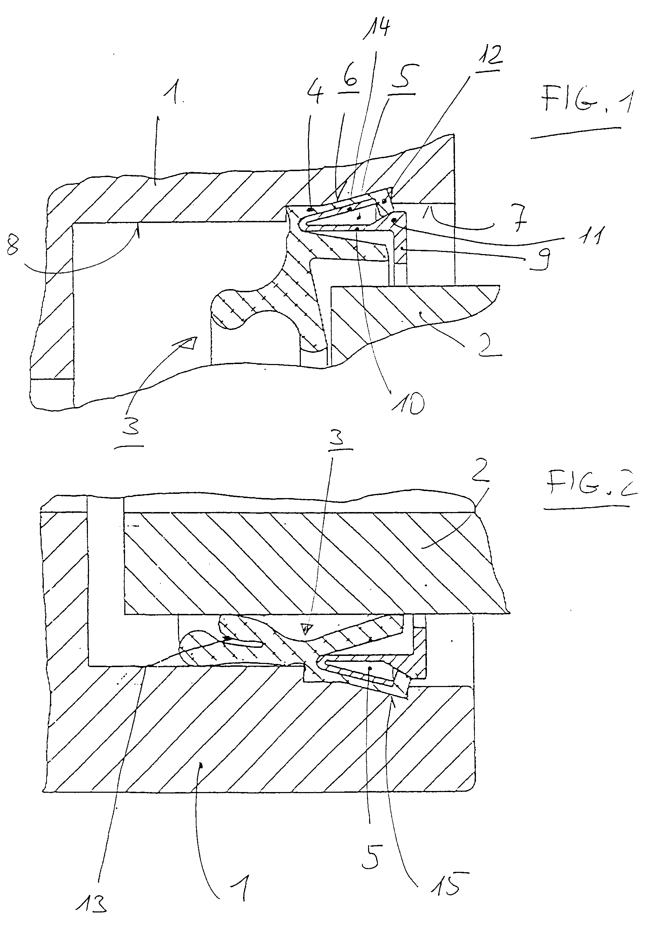

In der Fig. 1 ist in Teildarstellung und im Axialschnitt ein Ausführungsbeispiel der ringgedichteten Rohrdichtung gemäß der Erfindung gezeigt. Die dargestellte Rohrsteckverbindung zwischen einer Muffe 1 und einem Spitzende 2 wird mittels eines Dichtringes 3 gedichtet, der aus einem gummielastischem Werkstoff besteht. An dem Dichtring 3 ist eine Haltemanschette 4 angeformt, die durch einen Klemmring 5 zur Fixierung des Dichtringes 3 in einer Ringnut 6 nach radial auswärts vorgespannt ist. Die Ringnut 6 ist in der Innenwand der Muffe 1 ausgebildet und öffnet sich nach radial einwärts. Der Innendurchmesser der Muffe 1 ist in einem muffenkragenseitigen Abschnitt 7 größer als in einem muffenspiegelseitigem Abschnitt 8 der Muffe 1. Der außenliegende Abschnitt und der innenliegende Abschnitt 8 der Muffe sind durch die Ringnut 6 voneinander getrennt. Der Innendurchmesser der Muffe 1 ist also am muffenkragenseitigen Ende der Ringnut 6 größer als am muffenspiegelseitigen Ende der Ringnut 6.

Der Klemmring 5 ragt nach axial außen über die muffenkragenseitige Begrenzung der Ringnut 6 hinaus und überlappt den Innenmantel der Muffe 1 im Muffenabschnitt 7. In diesem Bereich ist am Haltering 5 ein Innenflansch 9 angeformt. Der Innendurchmesser des Innenflansches 9 ist größer als der in einem zulässigen Toleranzbereich größte tatsächliche Außendurchmesser des Spitzendes 2, gleichzeitig aber kleiner als der im Fertigungstoleranzbereich kleinste Innendurchmesser des engeren, spiegelseitigen Muffenabschnitts 8.

Gleichzeitig ist der Übergangsbereich zwischen dem Innenflansch 9 und dem radial innenliegenden, zumindest im wesentlichen zylindrischen Schenkel 10 des als V-förmiger Spreizring ausgebildeten federnden Klemmrings 5 mit einer ringförmigen Verstärkung 11 ausgerüstet, die nach radial auswärts vorspringt. Die Verstärkung 11 ist unter Normallast puffernd auf einem Wulstring 12 abgestützt, der nach radial einwärts vorspringend am kragenseitigen Ende der Haltemanschette 4 ausgebildet ist. Dabei ist der Innendurchmesser des Wulstringes 12 im unverformten Zustand kleiner als der Innendurchmesser der Muffe im kragenseitigen äußeren Abschnitt 7. Bei zunehmender Scheitellast und Aufliegen des Außenmantels des Spitzendes 2 auf dem Innenrand des Innenflansches 9 des Klemmringes 5 wird der Verstärkungsring 11 zunehmend nach radial auswärts gepreßt, bis er schließlich formschlüssig auf der Muffeninnenwand im Abschnitt 7 der Muffe aufliegt. Dabei wird durch diese Abstützung im Dichtabschnitt des Dichtringes ein definierter Mindestabstand der Dichtspaltbreite eingehalten.

Die Einhaltung einer solchen Mindestdichtspaltbreite auch bei höchster Scheitellast ist nicht nur für die Gewährleistung einer mechanischen Unversehrtheit der gummielastischen Dichtung im Dichtspaltbereich, sondern vor allem auch konfigurativ speziell bei solchen Dichtringen von Bedeutung, die durch die Ausbildung von Spreizlippen über einen offenen Dichtringspalt 13 (Fig. 2) mit zunehmendem Innendruck im Rohrleitungssystem mit zunehmender radialer Dichtkraft selbstdichtend sind. Dabei kann dieser Effekt der Einstellung und Einhaltung einer Mindestdichtspaltbreite durch anforderungsentsprechend konfigurierte Haltemittel wie den Innenflansch 9 des hier gezeigten federnd spreizenden Klemmringes bewirkt werden, ohne dabei den Dichtspalt selbst überdimensionieren zu müssen. Gemäß der Erfindung sind diese abstandwahrenden Mittel in den äußeren, radial erweiterten Kragenabschnitt der Muffe verlegt.

In dem in den Figuren 1 und 2 gezeigten Ausführungsbeispiel ist die Muffensohle nicht zylindrisch, sondern muffenspiegelseitig zylindrisch und muffenkragenseitig sich nach axial außen öffnend konisch konfiguriert. Dadurch kann eine Überdimensionierung sowohl der Haltemanschette 6 als auch des Klemmrings 5 vermieden werden. Ein optimales Ergebnis wird in der in den Figuren erkennbaren Weise erzielt, wenn der sich federnd radial spreizende Klemmring 5 mit seinem radial außenliegenden Schenkel 14 flächenkomplementär zur Konusfläche 15 der Ringnut 6 ausgebildet ist. Dadurch wird ein gutes flächenbündiges Verpressen des Halteringabschnitts 4 des Dichtringes 3 zwischen der radialen Außenwand des Klemmringes 5 und der radial innenliegenden Konusfläche 15 der Ringnut 6 gewährleistet.

Um Fertigungstoleranzen der Ringnutkonfiguration besser ausgleichen zu können, ist der radial außenliegende Schenkelring 14 des federn spreizenden Klemmringes nach Art einer axialen Rippung in Umfangsrichtung mit gleicher Winkelabmessung alternierend mit Bereichen stärkerer und schwächerer Wandstärke ausgebildet. Diese Gestaltung ermöglicht einen Toleranzausgleich unter Vermeidung einer Wellung des federnden Spreizringes 5.

## Patentansprüche

1. Ringgedichtete Rohrdichtung zwischen zwei konzentrisch übereinandergreifenden Rohrelementen (Spitzende und Muffe), insbesondere Rohrsteckverbindung, mit einem gummielastischen Dichtring, an dem eine Haltemanschette angeformt ist, die durch einen Klemmring zur Fixierung des Dichtringes in einer Ringnut fixiert ist, die sich nach radial innen öffnend in der Innenwand der Muffe ausgebildet ist,
dadurch **gekennzeichnet**,
daß der Innendurchmesser der Muffe am muffenkragenseitigen Ende der Ringnut größer ist als am muffenspiegelseitigen Ende der Ringnut.

2. Rohrdichtung nach Anspruch 1
dadurch **gekennzeichnet**,
daß der Klemmring nach axial außen auf den Kragen der Muffe zu über den muffenkragenseitigen Rand der Ringnut hinausragt und in dem die radial weitere Muffeninnenwand überlappenden Abschnitt einen nach radial innen vorspringenden und in der Radialebene liegenden Innenflansch angeformt aufweist, dessen Innendurchmesser größer als der in einem zulässigen Toleranzbereich größte tatsächliche Außendurchmesser des Spitzendes und kleiner als der im Festigungstoleranzbereich kleinste Innendurchmesser des engeren, spiegelseitigen Muffenabscnittes ist.

3. Rohrdichtung nach Anspruch 2,
**gekennzeichnet** durch
eine nach radial außen vorspringende Verstärkung im Übergangsbereich zwischen dem auf die radial weitere Muffeninnenwand vorspringenden Abschnitt des Klemmrings und dem ringförmigen Innenflansch.

4. Rohrdichtung nach einem der Ansprüche 1 bis 3,
dadurch **gekennzeichnet**,
daß der Klemmring ein aus Kunststoff bestehender federnder und im Profil V-förmig ausgebildeter Spreizring ist, der sich zum Muffenkragen hin öffnet, dessen radial außenliegender Schenkel axial kürzer als die Ringnut in der Muffe ist und die Haltemanschette des Dichtringes federnd in die Ringnut zwingt, während dessen radial innenliegender Schenkel zumindest im wesentlichen eine zur Rohrmuffe koaxiale zylindrische Konfiguration aufweist, wobei sich dieser radial innenliegende Schenkel des federnden Spreizringes über den kragenseitigen Rand der Ringnut hinaus, den radial weiteren Bereich der Innenwand der gestuften Muffe überlappend erstreckt.

5. Rohrdichtung nach einem der Ansprüche 1 bis 4,
dadurch **gekennzeichnet**,
daß die radial außenliegende Sohle der Ringnut in der Innenwand der Muffe muffenspiegelseitig zylindrisch und muffenkragenseitig konisch, und zwar sich zum Muffenkragen hin öffnend, konfiguriert ist, während sowohl die muffenspiegelseitige als auch die muffenkragenseitige, die Ringnut begrenzende Ringfläche in der Radialebene liegende Kreisringflächen sind

6. Rohrdichtung nach Anspruch 5,
dadurch **gekennzeichnet**,
daß der konische Abschnitt der Ringnutsohle und der radial äußere, ebenfalls eine Konusfläche bildende Schenkelring des V-förmigen Federringes so aufeinander abgestimmt und dimensioniert sind, daß der radial äußere Schenkel des federnden Spreizringes den Manschettenringabschnitt des Dichtringes auf der Konusfläche der Ringnutsohle verpreßt, während der kragenseitige Rand des radial äußeren Schenkelringes des federnden Spreizringes den Dichtring gegen axiales Herausziehen sichernd, entweder unmittelbar oder unter Zwischenlage eines Teils der Haltemanschette an der kragenseitigen radialen Kreisringfläche der Ringnut abgestützt ist.

7. Rohrdichtung nach Anspruch 6,
dadurch **gekennzeichnet**,
daß ein der kragenseitiger Wulstringabschnitt der Haltemanschette des Dichtringes einen Innendurchmesser aufweist, der geringfügig kleiner als der Innendurchmesser des radial erweiterten Rohrmuffenabschnitts in diesem Bereich ist, und so dimensioniert ist, daß die radial außenliegende Seite des Klemmrings oder der kragenseitigen Verstärkung des Klemmrings auf dem Wulstringabschnitt der Haltemanschette abgestützt ist, solange der Innenflansch des federnden Klemmrings keiner Scheitellast ausgesetzt ist, der Innenflansch dagegen auf der Innenwand der Muffen anschlägt und abgestützt ist, wenn der Flanschring und damit der Klemmring einer radialen, die Rohrachsen gegeneinander versetzenden Krafteinwirkung ausgesetzt ist.

8. Rohrdichtung nach einem der Ansprüche 4 bis 7,
dadurch **gekennzeichnet**,
daß der radial außenliegende Schenkelring des federnden Klemmringes nach Art eineraxialen Rippung in Umfangsrichtung alternierend Bereiche stärkerer und schwächerer Wandstärke aufweist.
